# EUROPEAN PATENT APPLICATION

(11) **EP 1 224 970 A1**
(43) Date of publication of application: **24.07.2002**
(21) Application number: 00954990.8
(22) Date of filing: 24.08.2000
(51) Int. Cl.: B01J 23/80, C10G 45/06

(54) **DEEP DESULFURIZATION CATALYST, METHOD FOR PREPARING THE SAME AND METHOD FOR DESULFURIZATION USING THE SAME**

(30) Priority: 27.08.1999 JP 24210699
(71) Applicant: COSMO OIL CO., LTD, Tokyo 105-0023 (JP)
(72) Inventor: YOGO, Tomoyuki, Cosmo Oil Co.,LTD., Satte-shi, Saitama 340-0112 (JP); SUZUKI, Takashi, Cosmo Oil Co.,LTD., Satte-shi, Saitama 340-0112 (JP); YOSHINARI, Tomohiro, Cosmo Oil CO.,LTD., Satte-shi, Saitama 340-0112 (JP)
(74) Representative: HOFFMANN EITLE
(86) International application number: PCT/JP00/05708
(87) International publication number: WO 01/15804

(57) **Abstract**

A catalyst for deep desulfurization of a mineral oil corresponding to kerosene, comprising a nickel component of nickel and nickel oxide, zinc oxide, and aluminum oxide, wherein the content of the nickel component in terms of nickel oxide is from 5 to 25% by weight and the content of the zinc oxide is from 30 to 70% by weight each based on the total of the content of the nickel component in terms of nickel oxide, the content of the zinc oxide, and the content of the aluminum oxide, the nitrogen monoxide adsorption of the catalyst at 1 kg/cm² (9.80×10⁻² MPa) and 40°C after hydrogen reduction at 360°C is 4.0 ml/g or more in terms of standard-state, and the catalyst has a specific surface area of from 10 to 300 m²/g; the deep desulfurization catalyst, which is obtained by carrying out an activation treatment in the presence of hydrogen at a temperature of from 200 to 400°C and a pressure of from 1 to 20 kg/cm² (9.80×10⁻² to 1.96 MPa); a process for producing the deep desulfurization catalyst, comprising mixing a basic substance with each of an aqueous solution of a water-soluble nickel metal salt and an aqueous solution of a water-soluble zinc metal salt or with a mixed aqueous solution thereof to thereby form precipitates separately or simultaneously, and mixing the precipitates with aluminum oxide or an aluminum oxide precursor, followed by molding and burning; and a method of deep desulfurization, comprising bringing a mineral oil corresponding to kerosene into contact with hydrogen in the presence of the above deep desulfurization catalyst at a temperature of from 200 to 400°C, a pressure of from 1 to 20 kg/cm² (9.80×10⁻² to 1.96 MPa), and an LHSV (liquid hourly space velocity) of from 0.1 to 5.

## Description

### TECHNICAL FIELD

The present invention relates to a catalyst for deep desulfurization of a mineral oil corresponding to kerosene, a production process thereof, and a deep desulfurization method using the catalyst. More particularly, the present invention relates to a deep desulfurization catalyst usable for deep desulfurization conducted as a step of pretreating a mineral oil which corresponds to kerosene and is to be subjected to steam reforming reaction, and to a production process thereof and a deep desulfurization method using the catalyst.

### BACKGROUND ART

Processes for hydrogen production include water electrolysis, which has been known from long ago, and techniques proposed recently, such as the partial oxidation of light hydrocarbons and autothermal reforming (ATR). However, a steam reforming process is suitable for small hydrogen generators and fuel cell systems because it is a relatively inexpensive process for hydrogen production excellent in handleability.

Since steam reforming catalysts are generally apt to be poisoned by sulfur compounds, it is necessary to desulfurize (pretreat) feedstock hydrocarbons beforehand. Because of this, hydrocarbons having a low sulfur content or lighter-than-naphtha hydrocarbons, which are readily desulfurized, have been mainly used so far. However, since hydrocarbons such as naphthas are not on general market, use thereof has a problem concerning availability to small consumers possessing small hydrogen production apparatus or possessing hydrogen generation apparatus for fuel cell systems. Furthermore, it is said that such hydrocarbons have a problem concerning handleability because of their high volatility, etc.

Recently, clean energies are increasingly expected from the standpoint of environmental preservation, and there is a desire for a technique for producing hydrogen from a raw fuel excellent in availability, handleability, and profitability. Although desulfurization to several hundred ppb or lower is required because steam reforming catalysts are readily poisoned, it is exceedingly difficult to deeply desulfurize mineral oils corresponding to kerosene because they contain aromatic sulfur compounds, i.e., so-called non-desulfurizable compounds. In particular, some small hydrogen production apparatus and fuel cell systems have no hydrogen purification unit because apparatus miniaturization is indispensable thereto. It is therefore necessary to design a catalyst on the supposition of cases where the hydrogen to be used for desulfurization contains carbon dioxide, *etc*. In the case of using hydrogen in which carbon dioxide is present, there is the higher possibility of posing problems, for example, that temperature control becomes difficult due to heat of reaction because the methanation reaction of these proceeds besides desulfurization reaction.

Furthermore, even when a mineral oil corresponding to kerosene can be desulfurized to a several hundred ppb level with a conventional catalyst under such operation conditions as to give an elevated degree of desulfurization, then this process has problems of the possibility of kerosene alteration (yellowing, *etc*.), catalyst powdering, hydrogen sulfide leakage to the downstream side, high reaction pressure, *etc*. Under these circumstances, it is desired to develop a desulfurization catalyst having even higher performance while taking account of simplification of apparatus constitution and long-term stable operation.

### DISCLOSURE OF THE INVENTION

An object of the present invention is to provide a deep desulfurization catalyst having such activity and strength that a mineral oil corresponding to kerosene can be deeply desulfurized to 0.1 wt. ppm (= 100 wt. ppb) or lower under relatively low-pressure conditions even with hydrogen containing carbonic acid gas while inhibiting methanation reaction and preventing oil alteration and that long-term stable operation is possible, a process for producing the catalyst, and a method of deep desulfurization using the same.

The present invention relates to a catalyst for deep desulfurization of a mineral oil corresponding to kerosene, comprising a nickel component of nickel and nickel oxide, zinc oxide, and aluminum oxide,
wherein the content of the nickel component in terms of nickel oxide is from 5 to 25% by weight and the content of the zinc oxide is from 30 to 70% by weight each based on the total of the content of the nickel component in terms of nickel oxide, the content of the zinc oxide, and the content of the aluminum oxide,
the nitrogen monoxide adsorption of the catalyst at 1 kg/cm² (9.80×10⁻² MPa) and 40°C after hydrogen reduction at 360°C is 4.0 ml/g or more in terms of standard-state, and
the catalyst has a specific surface area of from 10 to 300 m²/g.

Furthermore, the present invention relates to the above deep desulfurization catalyst, which is obtained by carrying out an activation treatment in the presence of hydrogen at a temperature of from 200 to 400°C and a pressure of from 1 to 20 kg/cm² (9.80×10⁻² to 1.96 MPa).

Moreover, the present invention relates to a process for producing the above deep desulfurization catalyst, comprising mixing a basic substance with each of an aqueous solution of a water-soluble nickel metal salt and an aqueous solution of a water-soluble zinc metal salt or with a mixed aqueous solution thereof to thereby form precipitates separately or simultaneously, and mixing the precipitates with aluminum oxide or an aluminum oxide precursor, followed by molding and burning.

Also, the present invention relates to a method of deep desulfurization, comprising bringing a mineral oil corresponding to kerosene into contact with hydrogen in the presence of the above deep desulfurization catalyst at a temperature of from 200 to 400°C, a pressure of from 1 to 20 kg/cm² (9.80×10⁻² to 1.96 MPa), and an LHSV (liquid hourly space velocity) of from 0.1 to 5.

### BEST MODE FOR CARRYING OUT THE INVENTION

The present invention will be explained below in detail.

The present inventors made intensive investigations in order to accomplish the above objects. As a result, they have found that a mineral oil corresponding to kerosene can be deeply desulfurized to a sulfur content of 0.1 ppm or lower by using a catalyst which is obtained through the step of subjecting a water-soluble nickel metal salt and a water-soluble zinc metal salt as raw materials to precipitation from a base solution, the step of mixing the precipitates with aluminum oxide or an aluminum oxide precursor, and a burning step and which comprises nickel or nickel oxide, zinc oxide, and aluminum oxide in specific amounts, has a specific nitrogen monoxide adsorption at ordinary pressure and 40°C after hydrogen reduction at 360°C, and has a specific surface area in a specific range. The present invention has thus been completed.

### Catalyst Composition:

The deep desulfurization catalyst of the present invention comprises three components, i.e., a nickel component of nickel and nickel oxide, zinc oxide, and aluminum oxide.

The content of the nickel component in terms of nickel oxide is from 5 to 25% by weight, preferably from 5 to 20% by weight, and especially preferably from 10 to 18% by weight, based on the total of the content of the nickel component in terms of nickel oxide, the content of the zinc oxide, and the content of the aluminum oxide. The nickel component serves to react the sulfur compounds contained in a mineral oil corresponding to kerosene (hereinafter, this mineral oil is referred to as "kerosene") with hydrogen to convert them into hydrogen sulfide. When the content thereof is 5% by weight or higher, preferred desulfurization performance is obtained. When the content thereof is 25% by weight or lower, the nickel component has a higher degree of dispersion to enable the catalytic performance to be sufficiently exhibited. The proportion of nickel to nickel oxide in the nickel component is not particularly limited.

The content of the zinc oxide is from 30 to 70% by weight, preferably from 40 to 70% by weight, and especially preferably from 50 to 70% by weight, based on the total of the content of the nickel component in terms of nickel oxide, the content of the zinc oxide, and the content of the aluminum oxide. The zinc oxide serves to properly maintain an oxidized state of the nickel and to trap hydrogen sulfide being generated. Consequently, when the content thereof is 30% by weight or higher, these performances can be sufficiently exhibited and methanation is inhibited to thereby sufficiently inhibit hydrogen sulfide leakage. When the content thereof is 70% by weight or lower, the nickel component and the aluminum component which will be described below are present in appropriate amounts to enable the catalytic performance to be sufficiently exhibited.

Aluminum oxide functions not only to increase the specific surface area to thereby facilitate the contact of the catalyst (active sites) with a kerosene and hydrogen (improve the catalyst effectiveness factor) but also to maintain strength. The content of the aluminum oxide is preferably from 5 to 65% by weight, more preferably from 10 to 65% by weight, and most preferably from 20 to 50% by weight, based on the total of the content of the nickel component in terms of nickel oxide, the content of the zinc oxide, and the content of the aluminum oxide. By regulating the content thereof to 5% by weight or higher, sufficient strength and a sufficient catalyst effectiveness factor are obtained. When the content thereof is 65% by weight or lower, the nickel component and zinc oxide are present in appropriate amounts to enable the catalyst performance to be sufficiently exhibited.

The deep desulfurization catalyst of the present invention, after hydrogen reduction in which from 50 to 500 mg of the catalyst is held at 360°C for 2 hours while passing hydrogen therethrough, has a nitrogen monoxide adsorption at 40°C of 4 ml/g or more, preferably from 4.0 to 7.0 ml/g, and especially preferably from 5.0 to 6.7 ml/g, in terms of standard-state (standard temperature and pressure: stp) adsorption. By regulating the nitrogen monoxide adsorption to 4 ml/g or more, sufficient desulfurization activity can be obtained. The nitrogen monoxide adsorption may be regarded as a measure of the amount of active sites of the desulfurization catalyst. It is reasonable to select carbon monoxide as a probe (probe molecule) for catalysts which function in a metallic state. However, for catalysts in which the oxidized state is difficult to specify like the catalyst of the present invention, it is more practical to select nitrogen monoxide, which is adsorbable even to active sites having a relatively highly oxidized state, as a probe (e.g., Suzuki, Yoshizawa, *et al*., *Journal of the Japan Institute of Energy,* Vol. 74, p. 806 (1995)).

The specific surface area is from 10 to 300 m²/g, more preferably from 30 to 250 m²/g, and most preferably from 40 to 200 m²/g. The specific surface area is measured by the BET method and expressed as a BET specific surface area (Braunauer-Emmett-Tailor specific surface area).

### Methods of Catalyst Preparation:

Various methods such as the impregnation method, precipitation method, coprecipitation method, kneading method and the like can be used for catalyst preparation. However, the precipitation method and coprecipitation method are most preferred because the catalyst of the present invention produced by these methods is apt to sufficiently exhibit its performance.

Preferred examples of catalyst preparation methods include a process for producing the deep desulfurization catalyst described above which comprises mixing a basic substance with each of an aqueous solution of a water-soluble nickel metal salt and an aqueous solution of a water-soluble zinc metal salt or with a mixed aqueous solution of both to thereby form precipitates separately or simultaneously, and mixing the precipitates with aluminum oxide or an aluminum oxide precursor, followed by molding and burning.

An embodiment of the preferred catalyst preparation method comprises preparing, for example, a mixed aqueous solution of a water-soluble zinc salt and a water-soluble nickel salt, dropping thereinto an alkaline water as a basic substance, sufficiently evenly mixing the resultant precipitate, and mixing this precipitate with aluminum oxide or an aluminum oxide precursor, followed by molding and burning.

Alternatively, the method may be a method which comprises dropping an alkaline water as a basic substance into each of an aqueous solution of a water-soluble zinc salt and an aqueous solution of a water-soluble nickel salt, sufficiently evenly mixing the resultant precipitates, and mixing the precipitate mixture with aluminum oxide or an aluminum oxide precursor, followed by molding and burning.

When compositions equal to the nickel precipitate and zinc precipitate are available, the same performance is obtained also by sufficiently mixing these compositions with aluminum oxide or an aluminum oxide precursor, followed by molding and burning.

Examples of the water-soluble nickel salt include easily available water-soluble nickel salts, such as nickel nitrate, nickel chloride, nickel acetate and the like. Examples of the water-soluble zinc salt include inorganic zinc, such as zinc nitrate, zinc borate, zinc chloride, zinc acetate and the like, and organic zinc. As the aluminum oxide, γ-alumina is most preferred. The specific surface area of the aluminum oxide is preferably from 100 to 350 m²/g, more preferably from 150 to 300 m²/g, and most preferably from 180 to 250 m²/g. With respect to the particle size, aluminum oxide powder which passes through a 100-mesh screen is preferred and one which passes through a 150-mesh screen is more preferred. Aluminum oxide powder which passes through a 180- to 200-mesh screen is easiest to handle.

The aluminum oxide precursor may be one which becomes aluminum oxide upon burning. Examples thereof include aluminum hydroxide, aluminum isopropoxide, and the like. Incidentally, aluminum isopropoxide can be converted to aluminum oxide by dissolving it in a solvent, e.g., ethylene glycol, hydrolyzing and condensation-polymerizing the aluminum isopropoxide using an acid or base as a catalyst, and then burning the reaction product (alkoxide method).

Aluminum hydroxide can be preferably used as the aluminum oxide precursor. With respect to the particle size, aluminum hydroxide powder which passes through a 100-mesh screen is preferred and one which passes through a 150-mesh screen is more preferred. Aluminum hydroxide powder which passes through a 180- to 200-mesh screen is easiest to handle.

For molding, a known method can be preferably selected, such as extruding, punching, press molding or the like. A shape suitable for the reactor and operation conditions can be selected, such as a cylindrical shape, Raschig ring, hollow shape, spherical shape or the like. For punching, an organic substance or inorganic compound can be added as a binder.

Examples of the basic substance include chlorides, sulfates, carbonates, and similar compounds of alkali metals or alkaline earth metals, ammonia, organic amines, and the like. Preferred are basic carbonates such as ammonium carbonate, sodium carbonate, and calcium carbonate and ammonia. More preferred are ammonium carbonate and ammonia. A combination of ammonium carbonate and ammonia is especially preferred. When ammonium carbonate and ammonia are used in combination, they are used in a proportion in the range of preferably from 1:9 to 9:1, especially preferably from 2:8 to 8:2.

The basic substance may be added as it is to the aqueous solution of a water-soluble nickel metal salt and that of a water-soluble zinc metal salt or to the mixed aqueous solution of these. Alternatively, the basic substance may be added in the form of an aqueous solution. However, it is preferred to add the basic substance in the form of an aqueous solution.

The precipitates are preferably dried before being mixed with aluminum oxide or an aluminum oxide precursor. Methods for drying are not particularly limited, and various drying methods are applicable. Although the drying temperature also is not particularly limited, it is preferably from 80 to 140°C. The drying time is preferably from 1 to 24 hours.

The burning temperature is preferably from 320 to 520°C, more preferably from 320 to 400°C, and most preferably from 350 to 400°C. By regulating the burning temperature to 320°C or higher, sufficient strength is obtained. By regulating the burning temperature to 520°C or lower, adverse influences such as sintering are diminished. Although the burning time is not particularly limited, 0.1 to 24 hours may be usually sufficient.

### Method of Desulfurization:

The catalyst of the present invention is packed into a fixed-bed reactor, which is operated at a temperature of from 200 to 400°C, preferably from 220 to 350°C, and most preferably from 240 to 330°C; an LHSV of from 0.1 to 5 vol/vol h⁻¹, preferably from 0.5 to 4 vol/vol h⁻¹, and more preferably from 0.5 to 3 vol/vol h⁻¹; and a pressure of from 1 to 20 kg/cm² (9.80×10⁻² to 1.96 MPa), preferably from 1 to 15 kg/cm² (9.80×10⁻² to 1.47 MPa), and more preferably from 1 to 10 kg/cm² (9.80×10⁻² to 9.80×10⁻¹ MPa). The hydrogen/kerosene volume ratio is from 30 to 300, preferably from 40 to 200, and most preferably from 50 to 150, in terms of standard-state ratio.

By desulfurizing a kerosene under the conditions described above, deep desulfurization to 0.1 ppm or lower can be attained without causing alteration.

Even when the hydrogen contains carbonic acid gas, the mineral oil corresponding to kerosene can be desulfurized. The allowable concentration of carbonic acid gas is 30 vol% or lower, preferably 25 vol% or lower, and more preferably 15 vol% or lower. By regulating the content of carbonic acid gas to a value within this range, the partial hydrogen pressure is prevented from decreasing relatively and a high degree of desulfurization is obtained.

The deeply desulfurized kerosene actually obtained with the catalyst and desulfurization method of the present invention is colorless and transparent.

By regulating the reaction temperature to 200°C or higher, desired desulfurization performance is obtained. By regulating the reaction temperature to 400°C or lower, kerosene alteration and the formation of by-products can be inhibited. There are no particular limitations on the lower limit of LHSV. However, LHSV's of 0.1 vol/vol h⁻¹ and higher are preferred from the standpoint of profitability because an increased efficiency of desulfurization per unit time is attained. By using an LHSV of 5 vol/vol h⁻¹ or lower, high desulfurization performance is obtained. With respect to pressure, there are no particular limitations on the upper limit. However, the practical upper limit is 20 kg/cm² (1.96 MPa) from the standpoints of the cost of construction and production, etc. Furthermore, by using a pressure of 1 kg/cm² (9.80×10⁻² MPa) or higher, the partial hydrogen pressure is prevented from decreasing and desired desulfurization performance can be exhibited. By regulating the hydrogen/kerosene volume ratio to 30 or higher, the amount of the oil passed per unit time is not limited. By regulating the ratio to 300 or lower, the hydrogen reacts sufficiently and the size of the apparatus can be reduced.

Although the catalyst of the present invention exhibits given performances when placed in a hydrogen atmosphere, it is preferable to perform a reduction treatment before the desulfurization treatment. By conducting a reduction treatment beforehand, stable catalytic activity can be obtained from the initial stage of a desulfurization reaction. A reduction treatment is preferred because the time required for the activity to reach a stationary region can be shortened as a result of the reduction treatment. Conditions for the activation treatment (hydrogen reduction treatment) include a temperature of from 200 to 400°C, preferably from 300 to 400°C, and most preferably from 330 to 380°C. When the temperature is 200°C or higher, it is preferable because sufficient activation is attained. The temperature is 380°C or lower, it is preferable because catalyst sintering and methanation induced by excessive reduction are diminished. The pressure is from 1 to 20 kg/cm² (9.80×10⁻² to 1.96 MPa), preferably from 1 to 15 kg/cm² (9.80×10⁻² to 1.47 MPa), and most preferably from 1 to 10 kg/cm² (9.80×10⁻² to 9.80×10⁻¹ MPa). Usually, the same pressure as in the desulfurization is satisfactory. The amount of hydrogen to be passed is not particularly limited, and the treatment may be conducted at a suitable GHSV (gas hourly space velocity) in the range of from 100 to 9,000 vol/vol h⁻¹. Although the reduction time varies depending on catalyst amount, reactor shape, *etc.* and is not determined unconditionally, it may be from 1 to 24 hours.

Mineral oils corresponding to kerosene which can be deeply desulfurized with the catalyst of the present invention are not particularly limited as long as they are mineral oils corresponding to kerosene. However, properties of the mineral oils corresponding to kerosene include a flash point of preferably 40°C or lower, a 95% running temperature, among distillation characteristics, of preferably 270°C or lower, a sulfur content of preferably 0.008% by weight or lower, and an aromatic content of preferably 20 vol% or lower.

The present invention will be described in more detail and explained concretely by means of Examples, but the scope of the present invention should not be construed as being limited by the Examples.

Procedures for instrumental analyses of properties, etc. are summarized below prior to the Examples.

### Measurement of Nitrogen Monoxide Adsorption:

An automatic gas adsorption apparatus (Type R6015) manufactured by Okura Riken was used for the measurement of nitrogen monoxide adsorption. A 50 to 500 mg portion of a sample was precisely weighed out and placed in a U-shaped sample tube made of quartz or borosilicate glass (commonly called "Pyrex glass"). High-purity helium was passed therethrough to purge away the air. Thereafter, the sample was heated from room temperature to 360°C over about 1 hour while passing hydrogen. After the temperature had reached 360°C, the sample was held for 2 hours in a hydrogen stream and then cooled to 40°C over 1 to 2 hours while passing high-purity helium gas again. A given amount (0.1 ml) of high-purity nitrogen monoxide (produced by Takachiho Kagaku; research grade) was passed over the sample at that temperature, and the amount of the nitrogen monoxide remaining unadsorbed was determined with a thermal conductivity detector (TCD). From the adsorption at 40°C was calculated the adsorption in the standard state (STP).

### Measurement of Specific Surface Area of Catalyst:

A surface area-measuring apparatus (Belsorp 28SA) manufactured by Bell Japan Corp. was used for the measurement of BET specific surface area. A 500 to 1,000 mg portion of a sample was precisely weighed out and packed into a sample tube made of quartz. The sample was heated from room temperature to 300°C over 1 hour while evacuating the tube to a vacuum on the order of from 10⁻¹ to 10⁻³ mmHg, and was held at that temperature for 2 hours under reduced pressure to conduct a degassing treatment. Thereafter, the sample was cooled to room temperature with evacuation, and the atmosphere in the tube was replaced with high-purity helium gas. The sample thus degassed was precisely weighed. Thereafter, the sample was allowed to adsorb nitrogen at a liquefied-nitrogen temperature (-196°C) to measure the specific surface area thereof.

### Sulfur Content Determination:

The sulfur content of a product was determined by the Raney nickel method (minimum limit of detection, 0.1 wt. ppm). For ascertaining the leakage of hydrogen sulfide to the downstream side, a Kitagawa's detector tube (minimum limit, 0.1 wt. ppm) was used.

### EXAMPLE 1

In 1,200 ml of ion-exchanged water were dissolved 5.8 g of nickel nitrate hexahydrate and 24.3 g of zinc acetate dihydrate. To this solution were added 10 wt% ammonium carbonate and 15 wt% ammonia water. Thus, a precipitate of zinc and nickel compounds was obtained. This precipitate was taken out by filtration, washed with water, and then dried at 120°C for 12 hours. To the precipitate obtained was added 19.5 g of γ-alumina powder. This mixture was sufficiently kneaded, subsequently molded with an extruder into a columnar shape having an outer diameter of 1.6 mm, and burned at 510°C for 24 hours to obtain Catalyst A containing 5 wt% nickel oxide, 30 wt% zinc oxide, and 65 wt% aluminum oxide. Catalyst A had a specific surface area of 248 m²/g and a nitrogen monoxide adsorption at 40°C (STP) of 4.0 ml/g. Ten grams of Catalyst A was precisely weighed out and reduced with hydrogen at a temperature of 400°C and a pressure of 1 kg/cm² (9.80×10⁻² MPa) for 3 hours. Subsequently, a commercial white kerosene (manufactured by Cosmo Oil Co., Ltd.; JIS #1 kerosene; sulfur content, 50 wt. ppm) was passed therethrough at a temperature of 400°C, a pressure of 1 kg/cm² (9.80×10⁻² MPa), and an LHSV of 0.1 vol/vol h⁻¹. The hydrogen/kerosene ratio (vol/vol at STP) was regulated to 300. For the desulfurization was used hydrogen containing 15 vol% carbonic acid gas. After 500-hour reaction, the deeply desulfurized kerosene had a sulfur content of 0.1 wt. ppm or lower and this deeply desulfurized kerosene was colorless and transparent. During the desulfurization reaction, no leakage of hydrogen sulfide to the downstream side was observed and almost no methane generated. After completion of the reaction, the catalyst was taken out and, as a result, no cracks were observed.

### EXAMPLE 2

In 1,200 ml of ion-exchanged water were dissolved 10.0 g of nickel acetate tetra hydrate and 43.9 g of zinc nitrate hexahydrate. A precipitate of zinc and nickel compounds was obtained in the same manner as in Example 1 and then dried. To the precipitate obtained was added 15 g of γ-alumina powder. This mixture was sufficiently kneaded, subsequently molded with an extruder into a columnar shape having an outer diameter of 1.6 mm, and burned at 400°C for 24 hours to obtain Catalyst B containing 10 wt% nickel oxide, 40 wt% zinc oxide, and 50 wt% aluminum oxide. Catalyst B had a specific surface area of 225 m²/g and a nitrogen monoxide adsorption at 40°C (STP) of 4.8 ml/g. Ten grams of Catalyst B was precisely weighed out and reduced with hydrogen at a temperature of 380°C and a pressure of 10 kg/cm² (9.80×10⁻¹ MPa) for 3 hours. Subsequently, the commercial white kerosene was passed therethrough at a temperature of 350°C, a pressure of 10 kg/cm² (9.80×10⁻¹ MPa), and an LHSV of 0.5 vol/vol h⁻¹. The hydrogen/kerosene ratio (vol/vol at STP) was regulated to 200. For the desulfurization was used hydrogen containing 20 vol% carbonic acid gas. After 500-hour reaction, the deeply desulfurized kerosene had a sulfur content of 0.1 wt. ppm or lower and this deeply desulfurized kerosene was colorless and transparent. During the desulfurization reaction, no leakage of hydrogen sulfide to the downstream side was observed and almost no methane generated. After completion of the reaction, the catalyst was taken out and, as a result, no cracks were observed.

### EXAMPLE 3

In 1,200 ml of ion-exchanged water were dissolved 17.5 g of nickel nitrate hexahydrate and 65.8 g of zinc nitrate hexahydrate. A precipitate of zinc and nickel compounds was obtained in the same manner as in Example 1 and then dried. To the precipitate obtained was added 11.5 g of aluminum hydroxide powder. This mixture was sufficiently kneaded, subsequently molded with an extruder into a columnar shape having an outer diameter of 1.6 mm, and burned at 370°C for 24 hours to obtain Catalyst C containing 15 wt% nickel oxide, 60 wt% zinc oxide, and 25 wt% aluminum oxide. Catalyst C had a specific surface area of 188 m²/g and a nitrogen monoxide adsorption at 40°C (STP) of 5.8 ml/g. Ten grams of Catalyst C was precisely weighed out and reduced with hydrogen at a temperature of 360°C and a pressure of 8 kg/cm² (7.84×10⁻¹ MPa) for 3 hours. Subsequently, the commercial white kerosene was passed therethrough at a temperature of 330°C, a pressure of 8 kg/cm² (7.84×10⁻¹ MPa), and an LHSV of 2 vol/vol h⁻¹. The hydrogen/kerosene ratio (vol/vol at STP) was regulated to 150. After 500-hour reaction, the deeply desulfurized kerosene had a sulfur content of 0.1 wt. ppm or lower and this deeply desulfurized kerosene was colorless and transparent. During the desulfurization reaction, no leakage of hydrogen sulfide to the downstream side was observed. After completion of the reaction, the catalyst was taken out and, as a result, no cracks were observed.

### EXAMPLE 4

In 1,200 ml of ion-exchanged water were dissolved 21.0 g of nickel nitrate hexahydrate and 18.0 g of zinc nitrate hexahydrate. A precipitate of zinc and nickel compounds was obtained in the same manner as in Example 1 and then dried. To the precipitate obtained was added 6.6 g of γ-aluminum powder. This mixture was sufficiently kneaded, subsequently molded with an extruder into a columnar shape having an outer diameter of 1.6 mm, and burned at 330°C for 24 hours to obtain Catalyst D containing 18 wt% nickel oxide, 60 wt% zinc oxide, and 22 wt% aluminum oxide. Catalyst D had a specific surface area of 183 m²/g and a nitrogen monoxide adsorption at 40°C (STP) of 6.3 ml/g. Ten grams of Catalyst D was precisely weighed out and reduced with hydrogen at a temperature of 360°C and a pressure of 8 kg/cm² (7.84×10⁻¹ MPa) for 3 hours. Subsequently, the commercial white kerosene was passed therethrough at a temperature of 330°C, a pressure of 8 kg/cm² (7.84×10⁻¹ MPa), and an LHSV of 2.5 vol/vol h⁻¹. The hydrogen/kerosene ratio (vol/vol at STP) was regulated to 100. For the desulfurization was used hydrogen containing 25 vol% carbonic acid gas. After 500-hour reaction, the deeply desulfurized kerosene had a sulfur content of 0.1 wt. ppm or lower and this deeply desulfurized kerosene was colorless and transparent. During the desulfurization reaction, no leakage of hydrogen sulfide to the downstream side was observed and almost no methane generated. After completion of the reaction, the catalyst was taken out and, as a result, no cracks were observed.

### EXAMPLE 5

In 1,200 ml of ion-exchanged water were dissolved 15.0 g of nickel acetate tetra hydrate and 54.8 g of zinc nitrate hexahydrate. A precipitate of zinc and nickel compounds was obtained in the same manner as in Example 1 and then dried. To the precipitate obtained was added 16.1 g of aluminum hydroxide powder. This mixture was sufficiently kneaded, subsequently molded with an extruder into a columnar shape having an outer diameter of 1.6 mm, and burned at 350°C for 24 hours to obtain Catalyst E containing 15 wt% nickel oxide, 50 wt% zinc oxide, and 35 wt% aluminum oxide. Catalyst E had a specific surface area of 203 m²/g and a nitrogen monoxide adsorption at 40°C (STP) of 6.1 ml/g. Ten grams of Catalyst E was precisely weighed out and reduced with hydrogen at a temperature of 330°C and a pressure of 15 kg/cm² (1.47 MPa) for 3 hours. Subsequently, the commercial white kerosene was passed therethrough at a temperature of 240°C, a pressure of 15 kg/cm² (1.47 MPa), and an LHSV of 3.0 vol/vol h⁻¹. The hydrogen/kerosene ratio (vol/vol at STP) was regulated to 100. After 500-hour reaction, the deeply desulfurized kerosene had a sulfur content of 0.1 wt. ppm or lower and this deeply desulfurized kerosene was colorless and transparent. During the desulfurization reaction, no leakage of hydrogen sulfide to the downstream side was observed. After completion of the reaction, the catalyst was taken out and, as a result, no cracks were observed.

### EXAMPLE 6

In 1,200 ml of ion-exchanged water were dissolved 20.0 g of nickel acetate tetra hydrate and 56.6 g of zinc acetate dihydrate. A precipitate of zinc and nickel compounds was obtained in the same manner as in Example 1 and then dried. To the precipitate obtained was added 4.6 g of aluminum hydroxide powder. This mixture was sufficiently kneaded, subsequently molded with an extruder into a columnar shape having an outer diameter of 1.6 mm, and burned at 400°C for 24 hours to obtain Catalyst F containing 20 wt% nickel oxide, 70 wt% zinc oxide, and 10 wt% aluminum oxide. Catalyst F had a specific surface area of 165 m²/g and a nitrogen monoxide adsorption at 40°C (STP) of 6.7 ml/g. Ten grams of Catalyst F was precisely weighed out and reduced with hydrogen at a temperature of 300°C and a pressure of 20 kg/cm² (1.96 MPa) for 3 hours. Subsequently, the commercial white kerosene was passed therethrough at a temperature of 220°C, a pressure of 20 kg/cm² (1.96 MPa), and an LHSV of 4.0 vol/vol h⁻¹. The hydrogen/kerosene ratio (vol/vol at STP) was regulated to 40. After 500-hour reaction, the deeply desulfurized kerosene had a sulfur content of 0.1 wt. ppm or lower and this deeply desulfurized kerosene was colorless and transparent. During the desulfurization reaction, no leakage of hydrogen sulfide to the downstream side was observed. After completion of the reaction, the catalyst was taken out and, as a result, no cracks were observed.

### EXAMPLE 7

In 1,200 ml of ion-exchanged water were dissolved 24.9 g of nickel acetate tetra hydrate and 56.6 g of zinc acetate dihydrate. A precipitate of zinc and nickel compounds was obtained in the same manner as in Example 1 and then dried. To the precipitate obtained was added 1.5 g of γ-alumina powder. This mixture was sufficiently kneaded, subsequently molded with an extruder into a columnar shape having an outer diameter of 1.6 mm, and burned at 400°C for 24 hours to obtain Catalyst G containing 25 wt% nickel oxide, 70 wt% zinc oxide, and 5 wt% aluminum oxide. Catalyst G had a specific surface area of 158 m²/g and a nitrogen monoxide adsorption at 40°C (STP) of 6.9 ml/g. Ten grams of Catalyst G was precisely weighed out and reduced with hydrogen at a temperature of 200°C and a pressure of 20 kg/cm² (1.96 MPa) for 3 hours. Subsequently, the commercial white kerosene was passed therethrough at a temperature of 200°C, a pressure of 20 kg/cm² (1.96 MPa), and an LHSV of 5.0 vol/vol h⁻¹. The hydrogen/kerosene ratio (vol/vol at STP) was regulated to 50. After 500-hour reaction, the deeply desulfurized kerosene had a sulfur content of 0.1 wt. ppm or lower and this deeply desulfurized kerosene was colorless and transparent. During the desulfurization reaction, no leakage of hydrogen sulfide to the downstream side was observed. After completion of the reaction, the catalyst was taken out and, as a result, no cracks were observed.

**Table 1**

| Example | 1 | 2 | 3 | 4 | 5 | 6 | 7 |
|---|---|---|---|---|---|---|---|
| Catalyst Composition | | | | | | | |
| Content in terms of nickel oxide (wt%) | 5 | 10 | 15 | 18 | 15 | 20 | 25 |
| Zinc oxide (wt%) | 30 | 40 | 60 | 60 | 50 | 70 | 70 |
| Aluminum oxide (wt%) | 65 | 50 | 25 | 22 | 35 | 10 | 5 |

| Catalyst Pretreatment | | | | | | | |
|---|---|---|---|---|---|---|---|
| Reduction temperature(°C) | 400 | 380 | 360 | 360 | 330 | 300 | 200 |
| Pressure (kg/cm²) | 1 | 10 | 8 | 8 | 15 | 20 | 20 |
| (Pressure (MPa)) | (9.80 ×10⁻²) | (9.80 ×10⁻¹) | (7.84 ×10⁻¹) | (7.84 ×10⁻¹) | (1.47) | (1.96) | (1.96) |

| Desulfurization Conditions | | | | | | | |
|---|---|---|---|---|---|---|---|
| Temperature (°C) | 400 | 350 | 330 | 330 | 240 | 220 | 200 |
| Pressure (kg/cm²) | 1 | 10 | 8 | 8 | 15 | 20 | 20 |
| (Pressure (MPa)) | (9.80 ×10⁻²) | (9.80 ×10⁻¹) | (7.84 ×10⁻¹) | (7.84 ×10⁻¹) | (1.47) | (1.96) | (1.96) |
| LHSV (vol/vol h⁻¹) | 0.1 | 0.5 | 2 | 2.5 | 3 | 4 | 5 |
| Hydrogen/kerosene (vol/vol) | 300 | 200 | 150 | 100 | 100 | 40 | 50 |
| Carbonic acid gas content (vol%) | 15 | 20 | 0 | 25 | 0 | 0 | 0 |
| Methanation | no | no | - | no | - | - | - |

| Catalyst Properties | | | | | | | |
|---|---|---|---|---|---|---|---|
| Specific surface area (m²/g) | 248 | 225 | 188 | 183 | 203 | 165 | 158 |
| NO adsorption (ml/g (stp) at 40°C | 4 | 4.8 | 5.8 | 6.3 | 6.1 | 6.7 | 6.9 |
| Cracking of catalyst after reaction | no | no | no | no | no | no | no |

| Properties of Desulfurized Kerosene | | | | | | | |
|---|---|---|---|---|---|---|---|
| Sulfur content (wt. ppm) | ≤0.1 | ≤0.1 | ≤0.1 | ≤0.1 | ≤0.1 | ≤0.1 | ≤0.1 |
| Hydrogen sulfide leakage | no | no | no | no | no | no | no |
| Color of deeply sulfurized kerosene | * | * | * | * | * | * | * |

| | | | | | | | |
|---|---|---|---|---|---|---|---|
| *: Colorless transparent | | | | | | | |

### COMPARATIVE EXAMPLE 1

In 1,200 ml of ion-exchanged water were dissolved 3.5 g of nickel nitrate hexahydrate and 56.6 g of zinc acetate dihydrate. To this solution were added 10 wt% ammonium carbonate and 15 wt% ammonia water. Thus, a precipitate of zinc and nickel compounds was obtained in the same manner as in Example 1. This precipitate was taken out by filtration, washed with water, and then dried at 120°C for 12 hours. To the precipitate obtained was added 8.1 g of γ-alumina powder. This mixture was sufficiently kneaded, subsequently molded with an extruder into a columnar shape having an outer diameter of 1.6 mm, and burned at 510°C for 24 hours to obtain Catalyst a containing 3 wt% nickel oxide, 70 wt% zinc oxide, and 27 wt% aluminum oxide. The catalyst a had a specific surface area of 191 m²/g and a nitrogen monoxide adsorption at 40°C (STP) of 3.3 ml/g. Ten grams of Catalyst a was precisely weighed out and reduced with hydrogen at a temperature of 400°C and a pressure of 1 kg/cm² (9.80×10⁻² MPa) for 3 hours. Subsequently, a commercial white kerosene (manufactured by Cosmo Oil Co., Ltd.; sulfur content, 50 wt. ppm) was passed therethrough at a temperature of 400°C, a pressure of 1 kg/cm² (9.80×10⁻² MPa), and an LHSV of 0.1 vol/vol h⁻¹. The hydrogen/kerosene ratio (vol/vol at STP) was regulated to 300. After 500-hour reaction, the deeply desulfurized kerosene had a sulfur content of 0.8 wt. ppm and this deeply desulfurized kerosene was colorless and transparent. During the desulfurization reaction, no leakage of hydrogen sulfide to the downstream side was observed. After completion of the reaction, the catalyst was taken out and, as a result, no cracks were observed.

### COMPARATIVE EXAMPLE 2

In 1,200 ml of ion-exchanged water were dissolved 20 g of nickel acetate tetra hydrate and 87.7 g of zinc nitrate hexahydrate. A precipitate of zinc and nickel compounds was obtained in the same manner as in Example 1 and then dried. This precipitate was sufficiently kneaded, subsequently molded with an extruder into a columnar shape having an outer diameter of 1.6 mm, and burned at 400°C for 24 hours to obtain Catalyst b containing 20 wt% nickel oxide and 80 wt% zinc oxide. Catalyst b had a specific surface area of 10 m²/g and a nitrogen monoxide adsorption at 40°C (STP) of 3.8 ml/g. Ten grams of Catalyst b was precisely weighed out and reduced with hydrogen at a temperature of 380°C and a pressure of 10 kg/cm² (9.80×10⁻¹ MPa) for 3 hours. Subsequently, the commercial white kerosene was passed therethrough at a temperature of 350°C, a pressure of 10 kg/cm² (9.80×10⁻¹ MPa), and an LHSV of 0.5 vol/vol h⁻¹. The hydrogen/kerosene ratio (vol/vol at STP) was regulated to 200. After 500-hour reaction, the deeply desulfurized kerosene had a sulfur content of 0.2 wt. ppm or lower and this deeply desulfurized kerosene was colorless and transparent. During the desulfurization reaction, no leakage of hydrogen sulfide to the downstream side was observed. After completion of the reaction, the catalyst was taken out and, as a result, cracks and slight powdering were observed.

### COMPARATIVE EXAMPLE 3

In 1,200 ml of ion-exchanged water were dissolved 17.5 g of nickel nitrate hexahydrate and 27.4 g of zinc nitrate hexahydrate. A precipitate of zinc and nickel compounds was obtained in the same manner as in Example 1 and then dried. To the precipitate obtained was added 27.5 g of aluminum hydroxide powder. This mixture was sufficiently kneaded, subsequently molded with an extruder into a columnar shape having an outer diameter of 1.6 mm, and burned at 370°C for 24 hours to obtain Catalyst c containing 15 wt% nickel oxide, 25 wt% zinc oxide, and 60 wt% aluminum oxide. Catalyst c had a specific surface area of 240 m²/g and a nitrogen monoxide adsorption at 40°C (STP) of 4.5 ml/g. Ten grams of Catalyst c was precisely weighed out and reduced with hydrogen at a temperature of 360°C and a pressure of 8 kg/cm² (7.84×10⁻¹ MPa) for 3 hours. Subsequently, the commercial white kerosene was passed therethrough at a temperature of 330°C, a pressure of 8 kg/cm² (7.84×10⁻¹ MPa), and an LHSV of 2.0 vol/vol h⁻¹. The hydrogen/kerosene ratio (vol/vol at STP) was regulated to 150. After 500-hour reaction, the deeply desulfurized kerosene had a sulfur content of 0.1 wt. ppm or lower and this deeply desulfurized kerosene was colorless and transparent. However, during the desulfurization reaction, leakage of hydrogen sulfide to the downstream side was observed. After completion of the reaction, the catalyst was taken out and, as a result, no cracks were observed.

### COMPARATIVE EXAMPLE 4

In 1,200 ml of ion-exchanged water were dissolved 40.9 g of nickel nitrate hexahydrate and 40.5 g of zinc acetate dihydrate. A precipitate of zinc and nickel compounds was obtained in the same manner as in Example 1 and then dried. To the precipitate obtained was added 27.5 g of aluminum hydroxide powder. This mixture was sufficiently kneaded, subsequently molded with an extruder into a columnar shape having an outer diameter of 1.6 mm, and burned at 370°C for 24 hours to obtain Catalyst d containing 35 wt% nickel oxide, 50 wt% zinc oxide, and 15 wt% aluminum oxide. Catalyst d had a specific surface area of 173 m²/g and a nitrogen monoxide adsorption at 40°C (STP) of 3.7 ml/g. Ten grams of Catalyst d was precisely weighed out and reduced with hydrogen at a temperature of 330°C and a pressure of 15 kg/cm² (1.47 MPa) for 3 hours. Subsequently, the commercial white kerosene was passed therethrough at a temperature of 240°C, a pressure of 15 kg/cm² (1.47 MPa), and an LHSV of 3.0 vol/vol h⁻¹. The hydrogen/kerosene ratio (vol/vol at STP) was regulated to 100. After 500-hour reaction, the deeply desulfurized kerosene had a sulfur content of 0.2 wt. ppm and this deeply desulfurized kerosene was colorless and transparent. During the desulfurization reaction, no leakage of hydrogen sulfide to the downstream side was observed. After completion of the reaction, the catalyst was taken out and, as a result, no cracks were observed.

### COMPARATIVE EXAMPLE 5

In 1,200 ml of ion-exchanged water were dissolved 5.0 g of nickel acetate tetra hydrate and 21.9 g of zinc nitrate hexahydrate. A precipitate of zinc and nickel compounds was obtained in the same manner as in Example 1 and then dried. To the precipitate obtained was added 22.5 g of γ-alumina powder. This mixture was sufficiently kneaded, subsequently molded with an extruder into a columnar shape having an outer diameter of 1.6 mm, and burned at 400°C for 24 hours to obtain Catalyst e containing 5 wt% nickel oxide, 20 wt% zinc oxide, and 75 wt% aluminum oxide. Catalyst e had a specific surface area of 263 m²/g and a nitrogen monoxide adsorption at 40°C (STP) of 5.0 ml/g. Ten grams of Catalyst e was precisely weighed out and reduced with hydrogen at a temperature of 300°C and a pressure of 20 kg/cm² (1.96 MPa) for 3 hours. Subsequently, the commercial white kerosene was passed therethrough at a temperature of 220°C, a pressure of 20 kg/cm² (1.96 MPa), and an LHSV of 4.0 vol/vol h⁻¹. The hydrogen/kerosene ratio (vol/vol at STP) was regulated to 50. After 500-hour reaction, the deeply desulfurized kerosene had a sulfur content of 0.1 wt. ppm or lower and this deeply desulfurized kerosene was colorless and transparent. However, during the desulfurization reaction, leakage of hydrogen sulfide to the downstream side was observed. After completion of the reaction, the catalyst was taken out and, as a result, no cracks were observed.

### COMPARATIVE EXAMPLE 6

In 1,200 ml of ion-exchanged water were dissolved 17.5 g of nickel nitrate hexahydrate and 27.4 g of zinc nitrate hexahydrate. A precipitate of zinc and nickel compounds was obtained in the same manner as in Example 1 and then dried. To the precipitate obtained was added 18.0 g of γ-alumina powder. This mixture was sufficiently kneaded, subsequently molded with an extruder into a columnar shape having an outer diameter of 1.6 mm, and burned at 370°C for 24 hours to obtain Catalyst f containing 15 wt% nickel oxide, 25 wt% zinc oxide, and 60 wt% aluminum oxide. Catalyst f had a specific surface area of 240 m²/g and a nitrogen monoxide adsorption at 40°C (STP) of 5.8 ml/g. Ten grams of Catalyst f was precisely weighed out and reduced with hydrogen at a temperature of 360°C and a pressure of 20 kg/cm² (1.96 MPa) for 3 hours. Subsequently, the commercial white kerosene was passed therethrough at a temperature of 480°C, a pressure of 8 kg/cm² (7.84×10⁻¹ MPa), and an LHSV of 2.0 vol/vol h⁻¹. The hydrogen/kerosene ratio (vol/vol at STP) was regulated to 150. After 500-hour reaction, the deeply desulfurized kerosene had a sulfur content of 0.1 wt. ppm or lower and this deeply desulfurized kerosene had yellowed. During the desulfurization reaction, no leakage of hydrogen sulfide to the downstream side was observed. After completion of the reaction, the catalyst was taken out and, as a result, no cracks were observed.

### COMPARATIVE EXAMPLE 7

In 1,200 ml of ion-exchanged water were dissolved 15.0 g of nickel acetate tetra hydrate and 27.4 g of zinc nitrate hexahydrate. A precipitate of zinc and nickel compounds was obtained in the same manner as in Example 1 and then dried. To the precipitate obtained was added 27.5 g of aluminum hydroxide powder. This mixture was sufficiently kneaded, subsequently molded with an extruder into a columnar shape having an outer diameter of 1.6 mm, and burned at 370°C for 24 hours to obtain catalyst g containing 15 wt% nickel oxide, 25 wt% zinc oxide, and 60 wt% aluminum oxide. Catalyst g had a specific surface area of 240 m²/g and a nitrogen monoxide adsorption at 40°C (STP) of 5.8 ml/g. Ten grams of Catalyst g was precisely weighed out and reduced with hydrogen at a temperature of 360°C and a pressure of 20 kg/cm² (1.96 MPa) for 3 hours. Subsequently, the commercial white kerosene was passed therethrough at a temperature of 150°C, a pressure of 8 kg/cm² (7.84×10⁻¹ MPa), and an LHSV of 2.0 vol/vol h⁻¹. The hydrogen/kerosene ratio (vol/vol at STP) was regulated to 150. After 500-hour reaction, the deeply desulfurized kerosene had a sulfur content of 0.6 wt. ppm and this deeply desulfurized kerosene was colorless and transparent. During the desulfurization reaction, no leakage of hydrogen sulfide to the downstream side was observed. After completion of the reaction, the catalyst was taken out and, as a result, no cracks were observed.

### COMPARATIVE EXAMPLE 8

In 1,200 ml of ion-exchanged water was dissolved 20 g of nickel acetate tetra hydrate. A precipitate of a nickel compound was obtained in the same manner as in Example 1 and then dried. To the precipitate obtained was added 24 g of aluminum oxide powder. This mixture was sufficiently kneaded, subsequently molded with an extruder into a columnar shape having an outer diameter of 1.6 mm, and burned at 400°C for 24 hours to obtain Catalyst h containing 20 wt% nickel oxide and 80 wt% aluminum oxide. Catalyst h had a specific surface area of 270 m²/g and a nitrogen monoxide adsorption at 40°C (STP) of 5.9 ml/g. Ten grams of Catalyst h was precisely weighed out and reduced with hydrogen at a temperature of 380°C and a pressure of 10 kg/cm² (9.80×10⁻¹ MPa) for 3 hours. Subsequently, the commercial white kerosene was passed therethrough at a temperature of 350°C, a pressure of 10 kg/cm² (9.80×10⁻¹ MPa), and an LHSV of 0.5 vol/vol h⁻¹. The hydrogen/kerosene ratio (vol/vol at STP) was regulated to 200. For the desulfurization was used hydrogen containing 25 vol% carbonic acid gas. After 500-hour reaction, the deeply desulfurized kerosene had a sulfur content of 0.9 wt. ppm and this deeply desulfurized kerosene was colorless and transparent. During the desulfurization reaction, leakage of hydrogen sulfide to the downstream side was observed and methane generation was also observed. After completion of the reaction, the catalyst was taken out and, as a result, no cracks were observed.

**Table 2**

| Comparative Example | 1 | 2 | 3 | 4 | 5 | 6 | 7 | 8 |
|---|---|---|---|---|---|---|---|---|
| Catalyst Composition | | | | | | | | |
| Content in terms of nickel oxide (wt%) | 3 | 20 | 15 | 35 | 5 | 15 | 15 | 20 |
| Zinc oxide (wt%) | 70 | 80 | 25 | 50 | 20 | 25 | 25 | 0 |
| Aluminum oxide (wt%) | 27 | 0 | 60 | 15 | 75 | 60 | 60 | 80 |

| Catalyst Pretreatment | | | | | | | | |
|---|---|---|---|---|---|---|---|---|
| Reduction temperature (°C) | 400 | 380 | 360 | 330 | 300 | 360 | 360 | 380 |
| Pressure (kg/cm²) | 1 | 10 | 8 | 15 | 20 | 20 | 20 | 10 |
| (Pressure (MPa)) | (9.80 ×10⁻²) | (9.80 ×10⁻¹) | (7.84 ×10⁻¹) | (1.47) | (1.96) | (1.96) | (1.96) | (9.80 ×10⁻¹) |

| Desulfurization Conditions | | | | | | | | |
|---|---|---|---|---|---|---|---|---|
| Temperature (°C) | 400 | 350 | 330 | 240 | 220 | 480 | 150 | 350 |
| Pressure (kg/cm²) | 1 | 10 | 8 | 15 | 20 | 8 | 8 | 10 |
| (Pressure (MPa)) | (9.80 ×10⁻²) | (9.80 ×10⁻¹) | (7.84 ×10⁻¹) | (1.47) | (1.96) | (7.84 ×10⁻²) | (7.84 ×10⁻²) | (9.80 ×10⁻²) |
| LHSV (vol/vol h⁻¹) | 0.1 | 0.5 | 2 | 3 | 4 | 2 | 2 | 0.5 |
| Hydrogen/kerosene (vol/vol) | 300 | 200 | 150 | 100 | 50 | 150 | 150 | 200 |
| Carbonic acid gas content (vol%) | | 25 | | | | | | 25 |
| Methanation | | no | | | | | | present |

| Catalyst Properties | | | | | | | | |
|---|---|---|---|---|---|---|---|---|
| Specific surface area (m²/g) | 191 | 10 | 240 | 173 | 263 | 240 | 240 | 270 |
| NO adsorption (ml/g (stp) at 40°C | 3.3 | 3.8 | 4.5 | 3.7 | 5 | 5.8 | 5.8 | 5.8 |
| Cracking of catalyst after reaction | no | present | no | no | no | no | no | no |

| Properties of Desulfurized Kerosene | | | | | | | | |
|---|---|---|---|---|---|---|---|---|
| Sulfur content (wt. ppm) | 0.8 | 0.2 | ≤0.1 | 0.2 | ≤0.1 | ≤0.1 | 0.6 | 0.9 |
| Hydrogen sulfide leakage | no | no | present | no | present | no | no | present |
| Color of deeply | * | * | * | * | * | yel- | * | * |
| sulfurized kerosene | | | | | | lowed | | |

| | | | | | | | | |
|---|---|---|---|---|---|---|---|---|
| * Colorless transparent | | | | | | | | |

### REFERENCE EXAMPLE 1

Ten milliliters of a commercial desulfurization catalyst was reduced with hydrogen at a temperature of 360°C and a pressure of 8 kg/cm² (7.84×10⁻¹ MPa) for 3 hours. Subsequently, the commercial white kerosene was passed therethrough at a temperature of 330°C, a pressure of 8 kg/cm² (7.84×10⁻¹ MPa), and an LHSV of 2.0 vol/vol h⁻¹. The hydrogen/kerosene ratio (vol/vol at STP) in this operation was regulated to 150. After 500-hour reaction, the deeply desulfurized kerosene had a sulfur content of 1 wt. ppm and this deeply desulfurized kerosene had yellowed. Furthermore, during the desulfurization reaction, leakage of hydrogen sulfide to the downstream side was observed.

**Table 3**

| Reference Example | 1 |
|---|---|
| Commercial Catalyst | |
| Catalyst Pretreatment | |
| Reduction temperature (°C) | 360 |
| Pressure (kg/cm²) | 8 |
| (Pressure (MPa)) | (7.84×10⁻¹) |

| Desulfurization Conditions | |
|---|---|
| Temperature (°C) | 330 |
| Pressure (kg/cm²) | 8 |
| (Pressure (MPa)) | (7.84×10⁻¹) |
| LHSV (vol/vol h⁻¹) | 2 |
| Hydrogen/kerosene (vol/vol) | 150 |
| Carbonic acid gas content (vol%) | |
| Methanation | |

| Properties of Desulfurized Kerosene | |
|---|---|
| Sulfur content (wt. ppm) | 1 |
| Hydrogen sulfide leakage | present |

The nickel component serves to cause sulfur compounds contained in a kerosene to react with hydrogen (undergo hydrogenation reaction) and thereby convert them into hydrogen sulfide. Consequently, in the case where the content in terms of nickel oxide was lower than a given value as shown in Comparative Example 1, the catalyst had a small NO adsorption and insufficient activity. Because of this, desulfurization was so insufficient that the product had a sulfur content of 0.8 wt. ppm. Conversely, in the case where the content in terms of nickel oxide was too high (35 wt%) as shown in Comparative Example 4, the catalyst had an NO adsorption as small as 3.7 ml/g. This indicates that the nickel component, although contained in a large amount, less contributed to catalytic activity, i.e., had a reduced degree of dispersion. As a result, the sulfur content in the product was 0.2 wt. ppm at the lowest. Thus, the content of the nickel component is preferably in the range of from 5 to 25% by weight in terms of nickel oxide. From the standpoint of hydrogenation activity only, higher nickel component contents are preferred as long as the component is not impaired in dispersion. However, in the present invention, the object is to provide a catalyst excellent in hydrogenation activity and hydrogen sulfide leakage inhibition. Furthermore, since it is inevitable for practical catalysts to be prevented from powdering, the content in terms of nickel oxide is thought to be more preferably from 5 to 20% by weight, most preferably from 10 to 18% by weight, when the effects of the other components are taken in account.

Zinc oxide has the effect of absorbing the hydrogen sulfide generated by the reaction of sulfur compounds contained in the kerosene with hydrogen (hydrogenation reaction) on the nickel component (active sites). It further has the effect of regulating the oxidized state of the nickel component. Consequently, in the case where the content of the zinc oxide component is low (Comparative Example 3), hydrogen sulfide leaks out to the downstream side. Although a steam reformer or the like is usually disposed on the downstream side, there is a higher possibility that the steam-reforming catalyst might be poisoned by the leakage of hydrogen sulfide and this poisoning arouses troubles in the whole apparatus such as a hydrogen production apparatus. Furthermore, in the case where hydrogen gas containing carbonic acid gas is used for a system containing no zinc oxide, methanation is apt to occur as shown in Comparative Example 8. This is because methanation is apt to proceed on (in) metallic nickel. These results show that the incorporation of zinc oxide is effective in properly maintaining an oxidized state of the nickel component.

Aluminum oxide has the effect of not only increasing the specific surface area to thereby heighten the probability of contact between reactants (kerosene and hydrogen) but also maintaining a strength. Consequently, in the case where aluminum oxide had not been added (Comparative Example 2), the sulfur content in the product was 0.2 wt. ppm at the lowest because of the too small specific surface area. Furthermore, the catalyst which had been subjected to the reaction had cracked, showing that the catalyst was unable to be used over long.

These results show that it is important to enable the nickel component, zinc oxide component, and aluminum oxide component to produce their respective effects while attaining a good balance among these.

As described above, by using the catalyst of the present invention, a mineral oil corresponding to kerosene can be deeply desulfurized stably.

### INDUSTRIAL APPLICABILITY

The deep desulfurization catalyst of the present invention has such activity and strength that a mineral oil corresponding to kerosene can be deeply desulfurized to 0.1 wt. ppm or lower under relatively low-pressure conditions even with hydrogen containing carbonic acid gas while inhibiting methanation reaction and preventing oil alteration and that long-term stable operation is possible.

## Claims

1. A catalyst for deep desulfurization of a mineral oil corresponding to kerosene, comprising a nickel component of nickel and nickel oxide, zinc oxide, and aluminum oxide,
wherein the content of the nickel component in terms of nickel oxide is from 5 to 25% by weight and the content of the zinc oxide is from 30 to 70% by weight each based on the total of the content of the nickel component in terms of nickel oxide, the content of the zinc oxide, and the content of the aluminum oxide,
the nitrogen monoxide adsorption of the catalyst at 1 kg/cm² (9.80×10⁻² MPa) and 40°C after hydrogen reduction at 360°C is 4.0 ml/g or more in terms of standard-state, and
the catalyst has a specific surface area of from 10 to 300 m²/g.

2. The deep desulfurization catalyst according to claim 1, which is obtained by carrying out an activation treatment in the presence of hydrogen at a temperature of from 200 to 400°C and a pressure of from 1 to 20 kg/cm² (9.80×10⁻² to 1.96 MPa).

3. A process for producing the deep desulfurization catalyst according to claim 1, comprising mixing a basic substance with each of an aqueous solution of a water-soluble nickel metal salt and an aqueous solution of a water-soluble zinc metal salt or with a mixed aqueous solution thereof to thereby form precipitates separately or simultaneously, and mixing the precipitates with aluminum oxide or an aluminum oxide precursor, followed by molding and burning.

4. A method of deep desulfurization, comprising bringing a mineral oil corresponding to kerosene into contact with hydrogen in the presence of the deep desulfurization catalyst according to claim 1 or 2 at a temperature of from 200 to 400°C, a pressure of from 1 to 20 kg/cm² (9.80×10⁻² to 1.96 MPa), and an LHSV of from 0.1 to 5.
